# EUROPÄISCHE PATENTSCHRIFT

(11) **EP 1 835 310 B1**
(45) Veröffentlichungstag und Bekanntmachung des Hinweises auf die Patenterteilung: **31.08.2011**
(21) Anmeldenummer: 07004393.0
(22) Anmeldetag: 03.03.2007
(51) Int. Cl.: G01V 8/20, F16P 3/14

(54) **Lichtgitter**
Light grid
Barrière lumineuse

(30) Priorität: 18.03.2006 DE 102006012537
(43) Veröffentlichungstag der Anmeldung: 19.09.2007
(73) Patentinhaber: Leuze electronic GmbH + Co. KG, 73277 Owen/Teck (DE)
(72) Erfinder: Rohbeck, Volker, Dr., 85244 Röhrmoos (DE)
(74) Vertreter: Ruckh, Rainer Gerhard

(56) Entgegenhaltungen:
- EP-A- 1 331 433
- EP-A- 1 443 343
- DE-A1- 10 038 025
- DE-A1- 10 227 710
- DE-A1-102004 022 812

## Beschreibung

Die Erfindung betrifft ein Lichtgitter gemäß dem Oberbegriff des Anspruchs 1.

Ein derartiges Lichtgitter ist aus der DE 102 27 710 A1 bekannt. Dieses Lichtgitter umfasst eine vorgegebene Anzahl von Strahlachsen wobei jede Strahlachse aus einem Sendelichtstrahlen emittierenden Sender und einem Empfänger, auf welchen die Sendelichtstrahlen bei freiem Strahlengang treffen besteht. Das Lichtgitter weist weiterhin eine Auswerteeinheit zur Auswertung der Empfangssignale der Empfänger auf. Bei Unterbrechung wenigstens einer Strahlachse in der Auswerteeinheit wird eine Objektmeldung generiert. An dem Lichtgitter ist eine Schnittstelleneinheit mit einer vorgegebenen Anzahl von Sendeelementen anbringbar, so dass das oder jedes Sendeelement optische Überbrückungssteuersignale in einen zugeordneten Empfänger einspeist. In Abhängigkeit der Überbrückungssteuersignale über die Auswerteeinheit sind vorgegebene Strahlachsen überbrückbar.

Anhand der von der Schnittstelleneinheit übertragenen Überbrückungssteuersignale können über die Auswerteeinheit vorgegebene Sektionen des Lichtgitters überbrückt werden. In den überbrückten Sektionen erfolgt keine Objektdetektion mehr, das heißt diese Sektionen bilden nicht sicherheitskritische Bereiche, die von dem Lichtgitter nicht mehr überwacht werden. Die zeitliche Abfolge der Überbrückung in vorgegebenen Sektionen und die Größen der Sektionen, die insbesondere auch das gesamte Lichtgitter umfassen können, sind durch die Überbrückungssteuersignale, insbesondere durch deren zeitliche Abfolgen eindeutig definiert.

Dieses Lichtgitter wird insbesondere im Bereich des Personenschutzes eingesetzt, wobei mit dem von den Strahlachsen des Lichtgitters aufgespannten Überwachungsbereich ein Gefahrenbereich an einer Maschine überwacht wird. Bei Erfassen eines Objektes in diesem Überwachungsbereich generiert das Lichtgitter eine Objektmeldung, die ein Abschalten der Maschine bewirkt um Gefährdungen von Personen auszuschließen.

Je nach Anwendungsfall können auch nicht sicherheitskritische Objekte, wie zum Beispiel zu bearbeitende Werkstücke, im Überwachungsbereich angeordnet sein. Wenn bei Erfassen dieser Objekte in dem Lichtgitter eine Objektmeldung generiert wird, würde dieses zu einem unnötigen Abschalten führen. Um derartige unnötige Abschaltbefehle für die Maschine zu vermeiden, werden die Bereiche des Lichtgitters, in welchen derartige nicht sicherheitskritische Objekte angeordnet sind, durch die von der Schnittstellen-Einheit generierten Überbrückungssignale deaktiviert.

Nachteilig bei diesem Lichtgitter ist jedoch, dass die optische Schnittstellen-einheit die Überbrückungssignale in eine bestimmte Anzahl von Empfängern auf optischem Weg einspeist. Damit stehen die Empfänger dieser Strahlachsen des Lichtgitters nicht mehr zur Objektdetektion zur Verfügung.

Weiterhin ist die Funktionalität des Lichtgitters in unerwünschter Weise dahin begrenzt, dass mit den Überbrückungssignalen allein eine Deaktivierung bestimmter Bereiche des Lichtgitters möglich ist.

Die EP 1 331 433 A2 betrifft ein Lichtgitter mit einer vorgegebenen Anzahl an Paaren von Lichtstrahlen emittierenden Sendern und Lichtstrahlen empfangenden Empfängern, die Strahlachsen des Lichtgitters bilden. In einem Einlernvorgang werden unterschiedliche Bereiche des Lichtgitters als Muting Bereiche, in welchen das Lichtgitter inaktiv ist, definiert. Ein solcher Muting Bereich kann selektiv durch ein Schaltsignal, das in einer Ablaufsteuerung extern generiert werden, ausgewählt und aktiviert werden.

Die DE 100 38 025 A1 betrifft ein Lichtgitter mit einer vorgegebenen Anzahl von Lichtachsen, die von Lichtstrahlen gebildet sind, die von einem Sender in Richtung eines zugeordneten Empfängers emittiert werden. Vor Inbetriebnahme werden zulässige Signalmuster für die Lichtachsen des Lichtgitters festgelegt, um damit als zulässige angesehene Objekte zu konfigurieren. Diese zulässigen Objekte werden dann während des Betriebs des Lichtgitters durch Vergleich der aktuell erhaltenen Signalmuster des Lichtgitters mit den festgelegten Signalmustern identifiziert.

Die DE 202 16 230 U1 betrifft ein Lichtgitter mit einer vorgegebenen Anzahl von Strahlachsen bildenden Paaren von Sendelichtstrahlen emittierenden Sendern und Empfängern sowie einer Auswerteeinheit zur Auswertung der an den Ausgängen der Empfänger anstehenden Empfangssignale, wobei eine vorgegebene Anzahl von Strahlachsen ausblendbar ist, und wobei in der Auswerteeinheit bei Registrieren wenigstens einer Unterbrechung einer nicht ausgeblendeten Strahlachse ein Objektfeststellungssignal generiert wird. Die Anzahl der ausgeblendeten Strahlachsen ist mittels einer Anzeigeeinheit anzeigbar.

Der Erfindung liegt die Aufgabe zugrunde, ein Lichtgitter der eingangs genannten Art mit einer erweiterten Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Lichtgitter dient zur Erfassung von Objekten in einem Überwachungsbereich und umfasst eine vorgegebene Anzahl von Sendelichtstrahlen emittierenden Sendern und Empfängern, wobei jeweils ein Empfänger und wenigstens ein zugeordneter Sender eine Strahlachse bilden. In einer Auswerteeinheit werden an den Ausgängen der Empfänger anstehende Empfangssignale zur Generierung eines Objektfeststellungssignals ausgewertet. Weiter sind in der Auswerteeinheit unterschiedliche Konfigurationen von Parametrierungen der Strahlachsen abgespeichert. In die Auswerteeinheit ist zur Parametrierung von Strahlachsen während des Betriebs des Lichtgitters mindestens ein Steuersignal einlesbar, mittels dessen wenigstens eine Konfiguration auswählbar ist. Als erste Konfiguration ist dessen Auflösung vorgebbar ist, wobei die Auflösung durch eine Anzahl N von aufeinander folgenden Strahlachsen definiert ist, welche für eine Objektmeldung gleichzeitig unterbrochen sein müssen. Als weitere Konfiguration der Strahlachsen ist mittels des Steuersignals wenigstens ein Blanking-Bereich vorgebbar, welcher von einer Teilmenge der Strahlachsen gebildet ist, wobei eine Unterbrechung von Strahlachsen des Blanking-Bereichs nicht zu einer Objektmeldung führt. Schließlich sind in der Auswerteeinheit Verzögerungszeiten für die Aktivierung einzelner Konfigurationen abgespeichert, wodurch die zeitliche Abfolge unterschiedlicher Parametrierungen festlegbar ist.

Durch das Einlesen des Steuersignals in das Lichtgitter wird eine dynamische Parametrierung der einzelnen Strahlachsen des Lichtgitters ermöglicht. Dies stellt gegenüber einer statischen Parametrierung des Lichtgitters vor dessen Inbetriebnahme eine erhebliche Vereinfachung und Flexibilisierung des Betriebs des Lichtgitters dar.

Ein wesentlicher Vorteil der Erfindung besteht darin, dass mit dem Steuersignal ein sicheres Umschaltkriterium zwischen unterschiedlichen Parameterkombinationen bereit gestellt werden kann, so dass das erfindungsgemäße Lichtgitter im Bereich des Personenschutzes einsetzbar ist.

Die sichere Umschaltung kann insbesondere durch ein Steuersignal generiert werden, welches in Abhängigkeit eines von einem Sensor generierten Sensorsignals erzeugt wird. In einer besonders vorteilhaften Ausgestaltung der Erfindung kann während des Betriebs des Lichtgitters die mit dem Steuersignal ausgegebene Parametrierung der Strahlachsen anhand der aktuellen Signalwerte der Empfänger der einzelnen Strahlachsen selbst überprüft werden, das heißt die Strahlachsen des Lichtgitters selbst bilden Sensoren zur Überprüfung der eingestellten Parametrierung. In diesem Fall reicht bereits das Sensorsignal eines einzigen externen Sensors als einkanalige Eingangsstruktur zur Generierung des Steuersignals aus, um dennoch eine sichere Umschaltung der Parametrierung des Lichtgitters zu bewerkstelligen.

Ein weiterer Vorteil der Erfindung besteht darin, dass mit dem Steuersignal eine Vielzahl von unterschiedlichen Parametrierungen des Lichtgitters vorgebbar ist, wobei insbesondere der zeitliche Ablauf unterschiedlicher Parametereinstellungen des Lichtgitters durch das Steuersignal vorgegeben werden kann.

Hierzu sind vorteilhaft die möglichen Parametereinstellungen der Lichtgitter als Konfiguration in der Auswerteeinheit des Lichtgitters abgespeichert, wobei durch das Steuersignal oder Kombinationen von Steuersignalen einzelne Konfigurationen ausgewählt werden können.

Weiterhin können in der Auswerteeinheit zur Festlegung der zeitlichen Abfolge von unterschiedlichen Parametrierungen Verzögerungszeiten für die Aktivierung einzelner Konfigurationen abgespeichert sein.

Als eine erste mögliche Parametrierung des Lichtgitters kann dessen Auflösung bei der Objektdetektion als Konfiguration im Lichtgitter hinterlegt sein.

Die Objektdetektion erfolgt für die einzelnen Strahlachsen des Lichtgitters nach dem Lichtschrankenprinzip. Eine freie Strahlachse liegt vor, wenn die Sendelichtstrahlen des Senders einer Strahlachse ungehindert auf den Empfänger auftreffen. Bei einem Objekteingriff treffen diese Sendelichtstrahlen des Senders auf das Objekt und gelangen somit nicht mehr zum zugeordneten Empfänger, das heißt die Strahlachse ist unterbrochen.

Bei maximaler Auflösung des Lichtgitters reicht bereits die Unterbrechung einer Strahlachse aus, damit in der Auswerteeinheit eine Objektmeldung generiert wird.

In der Auswerteeinheit kann als Konfiguration eine reduzierte Auflösung des Lichtgitters vorgegeben werden. Die reduzierte Auflösung ist als eine Anzahl von aufeinander folgenden Strahlachsen definiert, die gleichzeitig unterbrochen sein müssen, damit eine Objektmeldung generiert wird. Mit einer derartigen Objektmeldung wird erreicht, dass Objekte erst ab einer bestimmten Mindestgröße erkannt werden.

Als weitere Konfiguration können bestimmte Blanking-Bereiche des Lichtgitters vorgegeben sein, wobei ein Blanking-Bereich von wenigstens einem Bereich aufeinander folgender Strahlachsen oder im Grenzfall von einer einzelnen Strahlachse gebildet sein kann. Eine Unterbrechung einer Strahlachse innerhalb eines Blanking-Bereichs führt nicht zur Generierung einer Objektmeldung. Nur die Unterbrechung von Strahlachsen außerhalb der Blanking-Bereich führt zu einer Objektmeldung.

Durch die Definition von Blanking-Bereichen kann allgemein erreicht werden, dass sicherheitskritische Objekte von nicht sicherheitskritischen Objekten mittels des Lichtgitters unterschieden werden können. Die von nicht sicherheitskritischen Objekten unterbrochenen Strahlachsen werden als Blanking-Bereiche definiert, so dass eine Detektion eines nicht sicherheitskritischen Objekts nicht zu einer Objektmeldung führt. Dagegen führt eine Detektion von sicherheitskritischen Objekten durch Unterbrechung von Strahlachsen außerhalb des oder der Blanking-Bereiche zur Generierung einer Objektmeldung.

Je nach Ausbildung der nicht sicherheitskritischen Objekte können als Konfiguration feststehende, das heißt zeitlich unveränderliche Blanking-Bereiche vorgegeben werden. Weiterhin können auch bewegliche Blanking-Bereiche definiert werden, welche dem Umstand Rechnung tragen, dass sich nicht sicherheitskritische Objekte entlang vorgegebener Bahnen durch den Überwachungsbereich des Lichtgitters bewegen können.

Generell kann die Definition derartiger Blanking-Bereiche als sogenanntes monitored Blanking oder unmonitored Blanking erfolgen. Bei einem unmonitored Blanking werden die Strahlachsen der Blanking-Bereiche nicht überwacht, das heißt unabhängig davon ob die Strahlachsen der Blanking-Bereiche unterbrochen sind werden im Lichtgitter jeweils dieselben Ausgangssignale, insbesondere dasselbe Objektfeststellungssignal generiert.

Bei einem monitored Blanking wird dagegen überwacht, ob das nicht sicherheitskritische Objekt im jeweiligen Blanking-Bereich auch tatsächlich vorhanden ist, das heißt es wird überprüft, ob die Strahlachsen des Blanking-Bereichs unterbrochen sind. Ist dies nicht der Fall, liegt kein regulärer Betrieb des Lichtgitters vor, so dass von diesem ein entsprechendes Ausgangssignal generiert wird. Dies kann insbesondere dadurch erfolgen, dass im Lichtgitter eine Objektmeldung unabhängig davon generiert wird, ob außerhalb des Blanking-Bereichs eine unterbrochene Strahlachse registriert wird.

Bei diesem monitored Blanking arbeitet das Lichtgitter selbst als Sensor, der zur Überwachung der jeweils mit dem Steuersignal ausgewählten Konfiguration dient. In diesem Fall kann eine sichere Generierung eines Steuersignals durch ein Sensorsignal eines einzelnen Sensors, das heißt einen einkanaligen externen Sensorshuktur erzielt werden, da das erforderliche Sicherheitsniveau der Parametrierung des Lichtgitters mittels des Steuersignals durch die Überwachungsfunktion des Lichtgitters selbst realisiert wird.

Das erfindungsgemäße Lichtgitter kann zwei getrennte Gehäuse aufweisen, wobei in einem Gehäuse die Sender und im anderen Gehäuse die Empfänger angeordnet sind. Die Gehäuse sind an gegenüberliegenden Rändern des Überwachungsbereichs angeordnet. Alternativ kann das Lichtgitter als Transceiver ausgebildet sein, bei welchem die Sender und Empfänger in einem Gehäuse integriert sind, welche an einem Rand des Überwachungsbereichs angeordnet sind. In diesem Fall ist am gegenüberliegenden Rand des Überwachungsbereichs ein Reflektor angeordnet, über welchen bei freiem Überwachungsbereich die von den Sendern emittierten Sendelichtstrahlen zu dem zugeordneten Empfänger geführt sind.

Die Erfindung wird im Nachstehenden anhand der Zeichnungen erläutert. Es zeigen:
- Figur 1:: Schematische Darstellung eines Lichtgitters.
- Figur 2:: Schematische Darstellung der Strahlachsen des Lichtgitters mit einem Blanking-Bereich und einem in diesen eingeführten nicht sicherheitskritischen Objekt.
- Figur 3:: Anordnung gemäß Figur 2 während es Einführens des nicht sicherheitskritischen Objekts in den Blanking-Bereich.

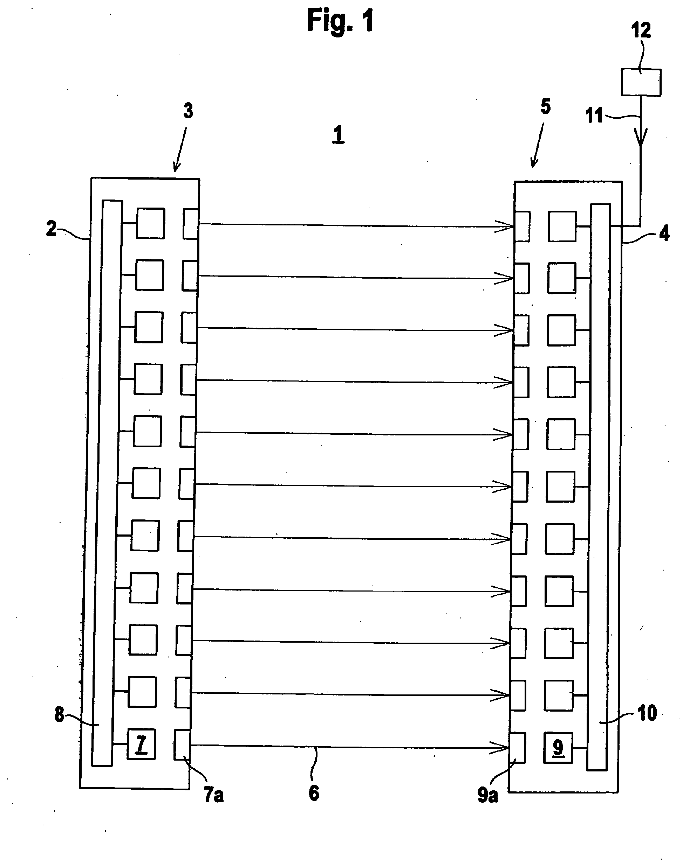

Figur 1 zeigt den Aufbau eines Lichtgitters 1 zur Überwachung eines Überwachungsbereichs. Das Lichtgitter 1 weist eine in einem ersten Gehäuse 2 integrierte Sendereinheit 3 und eine in einem zweiten Gehäuse 4 integrierte Empfängereinheit 5 auf.

Die Sendereinheit 3 weist eine Anordnung von Sendelichtstrahlen 6 emittierenden Sendern 7 auf. Die Sender 7 bestehen vorzugsweise aus identisch ausgebildeten Leuchtdioden und sind in Abstand nebeneinander liegend angeordnet. Die Sender 7 werden von einer Sender-Steuereinheit 8 angesteuert. Im vorliegenden Ausführungsbeispiel werden die Sender 7 im Pulsbetrieb betrieben. Die Sender 7 emittieren somit Sendelichtimpulse mit einem vorgegebenen Puls-Pausen-Verhältnis. Vorzugsweise emittieren die einzelnen Sender 7 zyklisch nacheinander Sendelichtimpulse, wobei die Taktung über die Sender-Steuereinheit 8 erfolgt.

Zur Strahlformung der Sendelichtstrahlen 6 ist jedem Sender 7 eine Sendeoptik 7a vorgeordnet. Die Sendeoptiken 7a sind im Bereich der Frontwand des Gehäuses 2 hinter einem nicht separat dargestellten Austrittsfenster angeordnet.

Die Empfängereinheit 5 weist eine Anordnung von identisch ausgebildeten, nebeneinander liegend angeordneten Empfängern 9 auf. Die Empfänger 9 bestehen vorzugsweise jeweils aus einer Fotodiode und sind äquidistant angeordnet. Jedem Empfänger 9 ist eine Empfangsoptik 9a vorgeordnet. Dabei liegt jeweils ein Empfänger 9 einem Sender 7 der Sendereinheit 3 gegenüber, so dass bei freiem Strahlengang die Sendelichtstrahlen 6 eines Senders 7 auf den gegenüberliegend angeordneten Empfänger 9 treffen.

Die am Ausgang der Empfänger 9 anstehenden Empfangssignale werden in einer zentralen Auswerteeinheit 10 ausgewertet. Die Auswerteeinheit 10 bildet zugleich eine Empfängersteuereinheit zur Steuerung des Betriebs der Empfänger 9.

Jeder Sendelichtstrahlen 6 emittierende Sender 7 bildet mit dem jeweils zugeordneten, gegenüberliegenden Empfänger 9 eine Strahlachse des Lichtgitters 1.

Durch eine optische Synchronisation, die insbesondere anhand einer spezifischen Kennung der von einem ausgewählten Sender 7 emittierten Sendelichtimpulse erfolgt, werden die Sender 7 und die Empfänger 9 der einzelnen Strahlachsen einzeln nacheinander zyklisch aktiviert.

Zur Objektdetektion werden in der Auswerteeinheit 10 die Empfangssignale mit einem Schwellwert bewertet. Liegt der Pegel der Empfangssignale eines Empfängers 9 oberhalb des Schwellwerts, liegt eine einem freien Strahlengang der Sendelichtstrahlen 6 entsprechende nicht unterbrochene Strahlachse vor. Liegt der Pegel der Empfangssignale des Empfängers 9 unterhalb des Schwellwerts liegt eine einem Objekteingriff entsprechende unterbrochene Strahlachse vor.

In Abhängigkeit dieser Empfangssignalbewertung wird in der Auswerteeinheit 10 ein binäres Objektfeststellungssignal generiert. Ein erster Schaltzustand "Objekt erkannt" bildet eine Objektmeldung, das heißt es wurde ein Objekt im Überwachungsbereich erfasst. Wird kein Objekt erkannt, nimmt das Objektfeststellungssignal einen zweiten Schaltzustand "freier Überwachungsbereich" ein.

Das Lichtgitter 1 wird bevorzugt im Bereich des Personenschutzes eingesetzt, wobei mit dem Lichtgitter 1 ein Gefahrenbereich an einer Maschine überwacht wird. Wird durch eine Objektdetektion im Überwachungsbereich im Lichtgitter 1 eine Objektmeldung generiert, so wird die Maschine abgeschaltet, um eine Gefährdung von Personen durch die Maschine zu verhindern. Die Objektmeldung bildet somit einen Abschaltbefehl für die Maschine. Demgegenüber wird die Maschine in Betrieb gesetzt, wenn das Objektfeststellungssignal den Schaltzustand "freier Überwachungsbereich" einnimmt.

Wie in Figur 1 dargestellt, kann über eine auf einen Eingang der Auswerteeinheit 10 angeschlossene Leitung 11 ein Steuersignal in die Auswerteeinheit 10 eingelesen werden. Das Steuersignal kann in Abhängigkeit eines externen Sensors 12 generiert werden, der in Figur 1 schematisch dargestellt ist.

Mit dem Steuersignal können die Strahlachsen des Lichtgitters 1 in unterschiedlicher Weise parametriert werden. Dabei sind in der Auswerteeinheit 10 verschiedene Konfigurationen von Parametrierungen der Strahlachsen abgespeichert, die mit dem eingelesenen Steuersignal selektiv aktiviert werden können. Durch Einlesen derartiger Steuersignale in das Lichtgitter 1 kann während dessen Betriebs dessen Parametrierung verändert werden. Weiterhin sind in der Auswerteeinheit 10 unterschiedliche Verzögerungszeiten abgespeichert, die ebenfalls mittels der Steuersignale aktivierbar sind, um unterschiedliche Konfigurationen mit den entsprechenden Verzögerungszeiten aktivieren zu können.

Als erste Konfiguration ist der Standardbetriebsmodus im Lichtgitter 1 abgespeichert, bei welchem die Unterbrechung einer beliebigen Strahlachse des Lichtgitters 1 zur Generierung einer Objektmeldung führt.

Als weitere Konfiguration kann in der Auswerteeinheit 10 eine reduzierte Auflösung vorgegeben werden. Hier ist als Parameterwert die Anzahl N von aufeinander folgenden Strahlachsen, die für die Generierung einer Objektmeldung unterbrochen sein müssen, abgespeichert.

Für den Fall N = 2 müssen daher beispielsweise zwei aufeinander folgende Strahlachsen zur Generierung einer Objektmeldung unterbrochen sein. Bei Unterbrechung nur einer Strahlachse erfolgt keine Objektmeldung. Mit dieser reduzierten Auflösung kann die Mindestgröße von Objekten, die mit dem Lichtgitter 1 erfasst werden sollen, vorgegeben werden.

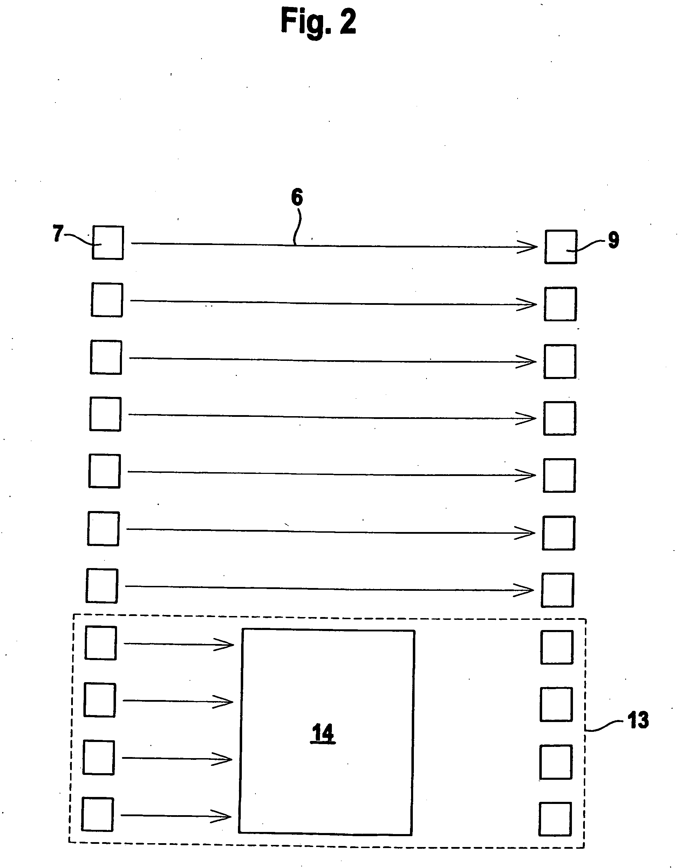

Als weitere Konfigurationen können verschiedene Blanking-Bereiche 13 für das Lichtgitter 1 vorgegeben werden. Ein solcher Blanking-Bereich 13 ist in Figur 2 schematisch dargestellt, wobei dieser die untersten vier Strahlachsen des Lichtgitters 1 umfasst.

Das Ausführungsbeispiel gemäß Figur 2 zeigt den Fall eines Fixed Blanking, bei welchem der Blanking-Bereich 13 unverändert bleibt. Prinzipiell kann sich bei einem sogenannten Floating Blanking auch der Blanking-Bereich 13 entlang des Lichtgitter 1 verschieben.

Bei der Betriebsart eines sogenannten unmonitored Blanking erfolgt eine Objektmeldung nur dann, wenn außerhalb des Blanking-Bereichs 13 wenigstens eine der Strahlachsen unterbrochen ist, und zwar unabhängig davon, ob innerhalb des Blanking-Bereichs 13 eine Strahlachse unterbrochen ist oder nicht.

Durch die Definition eines derartigen Blanking-Bereichs 13 ist eine Unterscheidung von sicherheitskritischen und nicht sicherheitskritischen Objekten beziehungsweise Bereichen möglich.

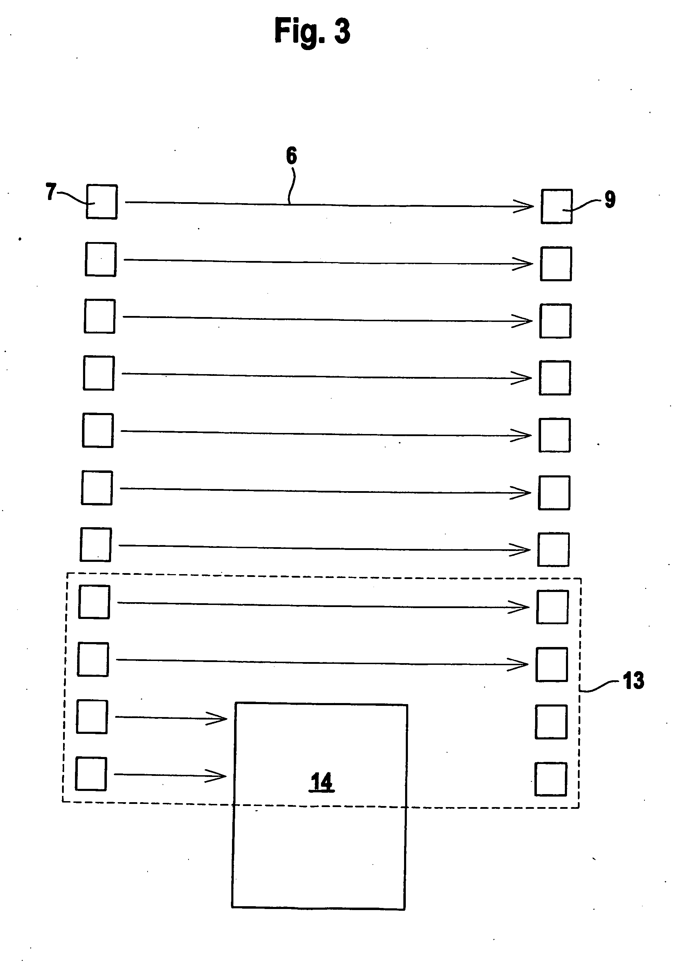

Das Ausführungsbeispiel gemäß Figur 2 zeigt im Lichtgitter 1 mit welchem der Gefahrenbereich einer Sägemaschine überwacht wird. Zur Bearbeitung einer Holzplatte 14 muss dieses in den Überwachungsbereich des Lichtgitters 1 in der in Figur 2 dargestellten Position eingeführt werden. Das Einführen der Holzplatte 14 in den Überwachungsbereich des Lichtgitters 1 wird bevorzugt mit dem externen Sensor 12 überwacht. Diese Holzplatte 14 bildet ein nicht sicherheitskritisches Objekt. Um ein unerwünschtes Abschalten der Sägemaschine bei Einführen in den Überwachungsbereich zu verhindern, werden die die Holzplatten 14 erfassenden Strahlachsen des Lichtgitters 1 als Blanking-Bereich 13 definiert. Dabei zeigt Figur 2 die Holzplatte 14 in ihrer Endposition. Figur 3 zeigt die Anordnung gemäß Figur 2 während des Einführens der Holzplatte 14.

Da die Holzplatte 14 immer innerhalb des Blanking-Bereichs 13 liegt, werden durch die Holzplatte 14 nur Strahlachsen innerhalb des Blanking-Bereichs 13 unterbrochen, so dass dies nicht zur Generierung einer Objektmeldung führt. Dringt demgegenüber ein sicherheitskritisches Objekt in den Überwachungsbereich ein und führt zu einer Unterbrechung wenigstens einer Strahlachse außerhalb des Blanking-Bereichs 13 so wird eine Objektmeldung und damit ein Abschaltbefehl für das Lichtgitter 1 generiert.

Als weitere Konfiguration kann ein sogenannter monitored Blanking-Bereich 13 im Lichtgitter 1 hinterlegt sein. In diesem Fall wird im Lichtgitter 1 überwacht, ob innerhalb des Blanking-Bereichs 13 ein nicht sicherheitskritisches Objekt angeordnet ist, das heißt ob die Strahlachsen des Blanking-Bereichs 13 unterbrochen sind. In diesem Fall wird eine Objektmeldung und damit ein Abschaltbefehl für die mit dem Lichtgitter 1 überwachte Maschine nicht nur dann generiert, wenn ein sicherheitskritisches Objekt in den Überwachungsbereich eindringt und zur Unterbrechung wenigstens einer Strahlachse außerhalb des Blanking-Bereichs 13 führt. Vielmehr wird ein Abschaltbefehl auch dann generiert, wenn nicht sämtliche Strahlachsen des Blanking-Bereichs 13 unterbrochen sind.

Für die Anordnung des Lichtgitters 1 an der Sägemaschine wird bevorzugt eine bestimmte zeitliche Abfolge unterschiedlicher Blanking-Betriebsarten vorgegeben.Während des Einführens der Holzplatte 14 im Blanking-Bereich 13, der in Figur 3 dargestellt ist, wird über das Steuersignal ein unmonitored Blanking für den dargestellten Blanking-Bereich 13 aktiviert. Weiterhin wird über das oder ein weiteres Steuersignal eine Verzögerungszeit definiert, für welche das unmonitored Blanking aktiv bleibt. Nach Ablauf der Verzögerungszeit erfolgt automatisch ein Umschalten auf ein monitored-Blanking. Die Verzögerungszeit ist dabei so gewählt, dass zum Umschaltzeitpunkt die Holzplatte 14 vollständig in den Blanking-Bereich 13 eingeführt ist.

Da während des Einführungsvorgangs der Holzplatte 14 gemäß Figur 3 ein unmonitored Blanking aktiviert ist, führt unabhängig davon, ob die Strahlachsen des Blanking-Bereichs 13 unterbrochen sind oder nicht, eine Unterbrechung einer Strahlachse außerhalb des Blanking-Bereichs 13 zu einem Abschaltbefehl für die Sägemaschine. Da während des Einführens der Holzplatte 14 in den Blanking-Bereich 13 nur ein Teil der Strahlachsen des Blanking-Bereichs 13 unterbrochen ist führt der Modus des unmonitored Blanking hier nicht zu einem unerwünschten Abschalten der Sägemaschine durch das Lichtgitter 1.

Nach Einführen der Holzplatte 14 in die in Figur 2 dargestellte Bearbeitungsposition erfolgt das Umschalten in das monitored Blanking. Hier wird durch die Überprüfung ob alle Strahlachsen des Blanking-Bereichs 13 tatsächlich unterbrochen sind, die korrekte Lage der Holzplatte 14 in der Bearbeitungsposition überprüft. Wäre beispielsweise die Holzplatte 14 nicht vollständig in die Bearbeitungsposition eingefahren, so dass nicht wie in Figur 2 dargestellt alle Strahlachsen des Blanking-Bereichs 13 unterbrochen sind, würde im Lichtgitter 1 ein Abschaltbefehl für die Sägemaschine generiert werden.

Ein entsprechendes Zeitprofil für die Vorgabe unterschiedlicher Blanking-Modi kann bei Herausfahren der Holzplatte 14 aus der Bearbeitungsposition gemäß Figur 2 über geeignete Steuersignale vorgegeben werden.

### Bezugszeichenliste

(1) Lichtgitter
(2) Gehäuse
(3) Sendereinheit
(4) Gehäuse
(5) Empfängereinheit
(6) Sendelichtstrahlen
(7) Sender (7a) Sendeoptik
(8) Sender-Steuereinheit
(9) Empfänger (9a) Empfangsoptik
(10) Auswerteeinheit
(11) Leitung
(12) Sensor
(13) Blanking-Bereich
(14) Holzplatte

## Patentansprüche

1. Lichtgitter (1) zur Erfassung von Objekten in einem Überwachungsbereich, mit einer vorgegebenen Anzahl von Sendelichtstrahlen (6) emittierenden Sendern (7) und Empfängern (9), wobei jeweils ein Empfänger (9) und wenigstens ein zugeordneter Sender (7) eine Strahlachse bilden, mit einer Auswerteeinheit (10), in welcher an den Ausgängen der Empfänger (9) anstehende Empfangssignale zur Generierung eines Objektfeststellungssignals ausgewertet werden und in welcher unterschiedliche Konfigurationen von Parametrierungen der Strahlachsen abgespeichert sind,wobei in die Auswerteeinheit (10) zur Parametrierung von Strahlachsen während des Betriebs des Lichtgitters (1) mindestens ein Steuersignal eingelesen ist mittels dessen wenigstens eine Konfiguration auswählt ist, wobei als erste Konfiguration der Strahlachsen mittels des Steuersignals wenigstens ein Blanking-Bereich (13) vorgegeben ist, welcher von einer Teilmenge der Strahlachsen gebildet ist, wobei eine Unterbrechung von Strahlachsen des Blanking-Bereichs (13) nicht zu einer Objektmeldung führt, **dadurch gekennzeichnet, dass** als weitere Konfiguration dessen Auflösung vorgegeben ist, wobei die Auflösung durch eine Anzahl N von aufeinander folgenden Strahlachsen definiert ist, welche für eine Objektmeldung gleichzeitig unterbrochen sein müssen, und dass in der Auswerteeinheit Verzögerungszeiten für die Aktivierung einzelner Konfigurationen abgespeichert sind, wodurch die zeitliche Abfolge unterschiedlicher Parametrierungen festgelegt ist.

2. Lichtgitter (1) nach Anspruch 1, **dadurch gekennzeichnet, dass** mittels eines Steuersignals eine zeitliche Abfolge verschiedener Konfigurationen aktivierbar ist, wobei eine Verzögerungszeit angibt, wann eine zweite Konfiguration nach Aktivierung einer ersten Konfiguration aktiviert wird.

3. Lichtgitter (1) nach einem der Ansprüche 1 oder 2, **dadurch gekennzeichnet, dass** das Steuersignal in Abhängigkeit eines von einem Sensor (12) generierten Sensorsignals generiert ist.

4. Lichtgitter (1) nach Anspruch 3, **dadurch gekennzeichnet, dass** mittels des Sensors (12) Objekte außerhalb des Überwachungsbereichs erfassbar sind.

5. Lichtgitter (1) nach einem der Ansprüche 1 bis 4, **dadurch gekennzeichnet, dass** in der Auswerteeinheit (10) zur Objekterfassung für jede Strahlachse eine Bewertung der Pegel der Empfangssignale des Empfängers (9) dieser Strahlachse durchgeführt wird.

6. Lichtgitter (1) nach Anspruch 5, **dadurch gekennzeichnet, dass** in der Auswerteeinheit (10) eine Strahlachse als frei gewertet wird, wenn die Sendelichtstrahlen (6) des Senders (7) auf den Empfänger (9) der Strahlachse auftreffen.

7. Lichtgitter (1) nach Anspruch 5 oder 6, **dadurch gekennzeichnet, dass** in der Auswerteeinheit (10) eine Strahlachse als unterbrochen gewertet wird, wenn die Sendelichtstrahlen (6) des Senders (7) nicht oder unvollständig auf den Empfänger (9) der Strahlachse geführt sind.

8. Lichtgitter (1) nach Anspruch 7, **dadurch gekennzeichnet, dass** als Objektmeldung das Objektfeststellungssignal den Schaltzustand "Objekt erkannt" einnimmt, wenn wenigstens eine Strahlachse unterbrochen ist.

9. Lichtgitter (1) nach Anspruch 8, **dadurch gekennzeichnet, dass** mit diesem eine Maschine gesteuert wird, wobei das Objektfeststellungssignal im Schaltzustand "Objekt erkannt" einen Abschaltbefehl für die Maschine bildet, und wobei das Objektfeststellungssignal in einem Schaltzustand "freier Überwachungsbereich" einen Einschaltbefehl bildet, mittels dessen das Arbeitsgerät in Betrieb gesetzt ist.

10. Lichtgitter (1) nach einem der Ansprüche 1 bis 9, **dadurch gekennzeichnet, dass** der Blanking-Bereich (13) als feststehender Blanking-Bereich (13) mit einer konstanten Teilmenge von Strahlachsen ausgebildet ist.

11. Lichtgitter (1) nach Anspruch 10, **dadurch gekennzeichnet, dass** der Blanking-Bereich (13) als beweglicher Blanking-Bereich (13) mit einer zeitlich veränderlichen Teilmenge von Strahlachsen ausgebildet ist.

12. Lichtgitter (1) nach einem der Ansprüche 1 bis 11, **dadurch gekennzeichnet, dass** als Konfiguration wenigstens ein unmonitored Blanking-Bereich vorgebbar ist, wobei der Schaltzustand des Objektfeststellungssignals unabhängig davon ist, ob die Strahlachsen dieses unmonitored Blanking-Bereichs unterbrochen sind oder nicht.

13. Lichtgitter (1) nach einem der Ansprüche 1 bis 12, **dadurch gekennzeichnet, dass** als Konfiguration wenigstens ein monitored Blanking-Bereich vorgebbar ist, wobei der Schaltzustand des Objektfeststellungssignals abhängig davon ist, ob die Strahlachsen dieses monitored Blanking-Bereichs unterbrochen sind oder nicht.

14. Lichtgitter (1) nach Anspruch 13, **dadurch gekennzeichnet, dass** mittels des Objektfeststellungssignals ein Abschaltbefehl für die Maschine generiert wird, falls nicht alle Strahlachsen durch wenigstens einen monitored Blanking-Bereich unterbrochen sind.

## Claims

1. Light grille (1) for detection of objects in a monitoring region, with a predetermined number of transmitters (7) emitting transmitted light beams (6) and receivers (9), wherein a respective receiver (9) and at least one associated transmitter (7) form a beam axis, with an evaluating unit (10) in which received signals present at the outputs of the receivers (9) are evaluated for generation of object detection signals and in which different configurations of parameterisations of the beam axes are stored, wherein at least one control signal by means of which at least one configuration is selected is read into the evaluating unit (10) for parameterising of beam axes during operation of the light grille (1), wherein at least one blanking region (13) formed by a part number of the beam axes is predetermined as a first configuration of the beam axes by means of the control signal, and wherein an interruption of beam axes of the blanking region (13) does not lead to an object report, **characterised in that** the resolution thereof is predetermined as a further configuration, wherein the resolution is defined by a number N of successive beam axes which have to be simultaneously interrupted for an object report, and that delay times for activation of individual configurations are stored in the evaluating unit, whereby the time sequence of different parameterisations is fixed.

2. Light grille (1) according to claim 1, **characterised in that** a time sequence with different configurations is activatable by means of a control signal, wherein a delay time indicates when a second configuration is activated after activation of a first configuration.

3. Lift grille (1) according to one of claims 1 and 2, **characterised in that** the control signal is generated in dependence on a sensor signal generated by a sensor (12).

4. Light grille (1) according to claim 3, **characterised in that** objects outside the monitoring region are detectable by means of the sensor (12).

5. Light grille (1) according to any one of claims 1 to 4, **characterised in that** for object detection for each beam axis an evaluation of the level of the received signals of the receiver (9) of this beam axis is performed in the evaluating unit (10).

6. Light grille (1) according to claim 5, **characterised in that** a beam axis is evaluated in the evaluating unit (10) as free when the transmitted light beams (6) of the transmitter (7) impinge on the receiver (9) of the beam axis.

7. Light grille (1) according to claim 5 or 6, **characterised in that** a beam axis is evaluated in the evaluating unit (10) as interrupted when the transmitted light beams (6) of the transmitter (7) are not led to or are not completely led to the receiver (9) of the beam axis.

8. Light grille (1) according to claim 7, **characterised in that** the switching state "object recognised" is adopted as object report when at least one beam axis is interrupted.

9. Light grille (1) according to claim 8, **characterised in that** a machine is controlled by this, wherein the object detection signal in the switching state "object recognised" forms a switch-off command for the machine and wherein the object detection signal in a switched state "free monitoring region" forms a switch-on command by means of which the working apparatus is placed in operation.

10. Light grille (1) according to any one of claims 1 to 9, **characterised in that** the blanking region (13) is constructed as a stationary blanking region (13) with a constant part number of beam axes.

11. Light grille (1) according to claim 10, **characterised in that** the blanking region (13) is constructed as a movable blanking region (13) with a part number of beam axes changing over time.

12. Light grille (1) according any one of claims 1 to 11, **characterised in that** at least one unmonitored blanking region is predeterminable as a configuration, wherein the switching state of the object detection signal is independent of whether or not the beam axes of this unmonitored blanking region are interrupted.

13. Light grille (1) according to any one of claims 1 to 12, **characterised in that** at least one monitored blanking region is predeterminable as a configuration, wherein the switching state of the object detection signal is dependent on whether or not the beam axes of this monitored blanking region are interrupted.

14. Light grille (1) according to claim 13, **characterised in that** a switch-off command for the machine is generated by means of the object detection signal if not all beam axes through at least one monitored blanking region are interrupted.

## Revendications

1. Barrière photoélectrique (1) pour la détection d'objets dans une zone de surveillance, avec un nombre prédéfini d'émetteurs (7) émettant des faisceaux lumineux d'émission (6) et de récepteurs (9), un récepteur (9) et au moins un émetteur (7) associé formant chaque fois un axe de faisceau, avec une unité d'évaluation (10) dans laquelle des signaux de réception présents aux sorties des récepteurs (9) sont évalués pour générer un signal de détection d'objet et dans laquelle différentes configurations de paramétrages des axes de faisceau sont stockées, au moins un signal de commande étant entré dans l'unité d'évaluation (10) pour paramétrer les axes de faisceau pendant le fonctionnement de la barrière photoélectrique (1), au moyen duquel au moins une configuration est sélectionnée, au moins une zone de suppression (13) étant prédéfinie en tant que première configuration des axes de faisceau au moyen du signal de commande, laquelle est formée d'un sous-ensemble des axes de faisceau, une interruption des axes de faisceau de la zone de suppression (13) n'entraînant pas une signalisation d'objet, **caractérisée en ce que** sa résolution est prédéfinie en tant que configuration supplémentaire, la résolution étant définie par un nombre N d'axes de faisceau successifs qui doivent être interrompus en même temps pour une signalisation d'objet, et que des temps de retard pour l'activation de différentes configurations sont stockés dans l'unité d'évaluation, par lesquels la succession dans le temps de différents paramétrages est définie.

2. Barrière photoélectrique (1) selon la revendication 1, **caractérisée en ce qu'**une succession dans le temps de différentes configurations peut être activée au moyen d'un signal de commande, un temps de retard indiquant quand une deuxième configuration est activée après activation d'une première configuration.

3. Barrière photoélectrique (1) selon une des revendications 1 ou 2, **caractérisée en ce que** le signal de commande est généré en fonction d'un signal de capteur généré par un capteur (12).

4. Barrière photoélectrique (1) selon la revendication 3, **caractérisée en ce que** le capteur (12) permet de détecter des objets à l'extérieur de la zone de surveillance.

5. Barrière photoélectrique (1) selon une des revendications 1 à 4, **caractérisée en ce que** pour la détection d'objets, on effectue pour chaque axe de faisceau une évaluation des niveaux des signaux de réception du récepteur (9) de cet axe de faisceau dans l'unité d'évaluation (10).

6. Barrière photoélectrique (1) selon la revendication 5, **caractérisée en ce qu'**un axe de faisceau est déclaré libre dans l'unité d'évaluation (10) quand les faisceaux lumineux d'émission (6) de l'émetteur (7) atteignent le récepteur (9) de l'axe de faisceau.

7. Barrière photoélectrique (1) selon la revendication 5 ou 6, **caractérisée en ce qu'**un axe de faisceau est déclaré interrompu dans l'unité d'évaluation (10) quand les faisceaux lumineux d'émission (6) de l'émetteur (7) n'atteignent pas ou atteignent incomplètement le récepteur (9) de l'axe de faisceau.

8. Barrière photoélectrique (1) selon la revendication 7, **caractérisée en ce que** le signal de détection d'objet prend l'état logique « objet détecté » en guise de signalisation d'objet quand au moins un axe de faisceau est interrompu.

9. Barrière photoélectrique (1) selon la revendication 8, **caractérisée en ce qu'**elle sert à commander une machine, le signal de détection d'objet formant dans l'état logique « objet détecté » une instruction d'arrêt pour la machine et le signal de détection d'objet formant dans l'état logique « zone de surveillance libre » une instruction de mise sous tension au moyen de laquelle l'appareil de travail est mis en service.

10. Barrière photoélectrique (1) selon une des revendications 1 à 9, **caractérisée en ce que** la zone de suppression (13) est réalisée sous la forme d'une zone de suppression (13) fixe comportant un sous-ensemble constant d'axes de faisceau.

11. Barrière photoélectrique (1) selon la revendication 10, **caractérisée en ce que** la zone de suppression (13) est réalisée sous la forme d'une zone de suppression (13) mobile comportant un sous-ensemble variable d'axes de faisceau.

12. Barrière photoélectrique (1) selon une des revendications 1 à 11, **caractérisée en ce qu'**au moins une zone de suppression non contrôlée peut être prédéfinie en tant que configuration, l'état logique du signal de détection d'objet étant indépendant du fait que les axes de faisceau de cette zone de suppression non contrôlée soient interrompus ou non.

13. Barrière photoélectrique (1) selon une des revendications 1 à 12, **caractérisée en ce qu'**au moins une zone de suppression contrôlée peut être prédéfinie en tant que configuration, l'état logique du signal de détection d'objet dépendant du fait que les axes de faisceau de cette zone de suppression contrôlée soient interrompus ou non.

14. Barrière photoélectrique (1) selon la revendication 13, **caractérisée en ce qu'**une instruction d'arrêt pour la machine est générée au moyen du signal de détection d'objet si tous les axes de faisceau ne sont pas interrompus par au moins une zone de suppression.
